(19) Europäisches Patentamt

European Patent Office

Office européen des brevets

(11) **EP 0 483 996 B1**

(12) **EUROPEAN PATENT SPECIFICATION**

(45) Date of publication and mention
of the grant of the patent:
**01.12.1999 Bulletin 1999/48**

(51) Int Cl.⁶: **G01S 7/52**, G01S 15/89,
B63B 22/18

(21) Application number: **91309448.8**

(22) Date of filing: **15.10.1991**

(54) **Method and apparatus for underwater sonar scanning**

Verfahren und Gerät zum Abtasten für Unterwassersonar

Procédé et appareil de sonar pour balayage sous l'eau

(84) Designated Contracting States:
**BE DE ES FR GB IT NL**

(30) Priority: **01.11.1990 GB 9023726**

(43) Date of publication of application:
**06.05.1992 Bulletin 1992/19**

(60) Divisional application: **96201762.0 / 0 757 258**

(73) Proprietor: **BG plc**
**Reading, Berkshire RG6 1PT (GB)**

(72) Inventor: **Ingram, Robert**
**Wallsend, Tyne & Wear NE28 9QL (GB)**

(56) References cited:
WO-A-85/03269          FR-A- 2 562 204
GB-A- 2 105 285        US-A- 4 686 927
US-E- 31 026

- **OCEANS '88 CONFERENCE PROCEEDINGS, Baltimore, Maryland, 31st October - 2nd November 1988, pages 329-334, IEEE, New York, US; R.G. ASPLIN et al.: "A new generation side scan sonar"**
- **IDEM**
- **IDEM**
- **OCEAN ENGINEERING AND THE ENVIRONMENT, CONFERENCE RECORD, San Diego, California, 12th - 14th November 1985, pages 682-685; E. HAMMERSTAD et al.: "Field performance of the benigraph high-resolution multibeam seafloor mapping system"**
- **TRANSACTIONS (C) OF THE INST. OF MAR. ENG., vol. 91, no. 3, 1979, pages 51-64; R. BOND: "Dynamic positioning control systems and operational experience"**
- **THE MOTOR SHIP, vol. 68, no. 801, April 1987, pages 39-45, Sutton, Surrey, GB; ANONYMOUS: "Station keeping systems are making steady progress"**
- **PATENT ABSTRACTS OF JAPAN, vol. 9, no. 322 (M-440), 18th December 1985; & JP-A-60 154 987 (BOEICHO GIJUTSU) 14-08-1985**

**Description**

The invention relates to underwater sonar scanning.

In this specification "sea" means the sea or other body of water and expressions involving "sea" are to be interpreted accordingly.

Underwater sonar scanning is used when a coffer dam is being installed on the seabed, for example, or when a mound of mud resulting from an oil drilling operation is scanned. The mound of mud is scanned in order to gain accurate dimensions of the mound. However, whatever feature is scanned the accuracy of the data obtained is greatly improved if the motion of the scanning head or heads, due to sea motion is compensated for.

An article by Robert G Asplin in the proceedings of the conference "Oceans 88" sponsored by Marine Technology Society IEEE held at Baltimore, Maryland, USA on October 31- November 2 1988 at pages 328 to 334 IEEE New York USA and is entitled " A new generation side scan sonar".

The system uses a towfish and gives a visual display of the seabed, but like all side scan sonars it uses a very wide sonar beam which illuminates the entire width of the swathe or path which the sonar traverses.

In patent specification WO 85/03269, a remotely operated submersible vehicle (ROV) is described. In one embodiment the vehicle is anchored to the seabed by a clump weight and a cable, which passes to a winch on the vehicle. The cable passes through a cable guide and the guide is connected to a hydraulic cylinder acting horizontally.

In the above arrangements some attempt is made to stabilise or compensate for device positioning above the seabed.

The present invention is concerned with improved arrangements capable of accurate sonar scanning for enhanced results.

According to the invention these is provided a method of underwater sonar scanning comprising using a sonar head to scan the seabed to produce sonar data, the head being mounted on a body immersed in the water, obtaining measurements relating to the position of the sonar head above the seabed and using the measurements in a computer in relation to the sonar data, characterised in that the body is resting on the bed, the actual position of the body being different from a mean horizontal position, the body having one or two heads and the or each head emitting a narrow sonar beam on to the seabed, the or each head being moved relative to said body in steps whereby the beam from the head is moved relative to said body in steps so as to progressively occupy different locations within the area being scanned, and for each of said locations sonar data is obtained corresponding to the actual distance between said location and the actual position of the head, and for each said location a set of measurements is obtained comprising a measurement of the position of the or each head above the seabed using pressure transducer means and pitch and roll measurements, said set of measurements being used to correct the sonar data so that they relate to a mean horizontal position of the body.

Further according to the invention there is provided a method of underwater sonar scanning comprising using a sonar head to scan the seabed to produce sonar data, the head being mounted on a body immersed in the water, obtaining measurements relating to the position of the sonar head above the seabed and using the measurements in a computer in relation to the sonar data, characterised in that the body is tethered to a clump weight resting on the bed, the actual position of the body being different from a mean horizontal position, the body having one or two heads and the or each head emitting a narrow sonar beam on to the seabed, the or each head being moved relative to said body in steps whereby the beam from the head is moved relative to said body in steps so as to progressively occupy different locations within the area being scanned, and for each of said locations sonar data is obtained corresponding to the actual distance between said location and the actual position of the head, and for each said location a set of measurements is obtained comprising a measurement of the position of the or each head above the seabed using footage mechanism, pitch and roll measurements, measuring the horizontal displacement using two transducers mounted respectively on two mutually orthogonal shafts in a gimbals mechanism, the shaft at the intersection of the shafts being connected to a lever the angle of which depends on the angle between vertical and a wire connecting the body and the clump weight and an angular displacement about a vertical axis, and using said measurements for each of said locations to correct the sonar data so that they relate to a mean horizontal position of the body.

The body may be a coffer dam or a buoy, a ROV, a weighted frame or structure. Or a ROV-type frame or structure with or without buoyancy.

In a first arrangement the apparatus for use in performing the method is characterised in that the body comprises a coffer dam handled by a crane wire running from a crane on a support vessel, the coffer dam having two sonar heads mounted upon it, each head being capable of movement by rotation in steps about a first axis which is horizontal when the coffer dam is horizontal, each head emitting a narrow sonar beam onto the seabed within the coffer dam, the position of the beam from the head being capable of being moved relatively to said coffer dam in steps about a second axis orthogonal to said first axis, said second axis being horizontal when said coffer dam is horizontal the two axes being spaced apart horizontally when the coffer dam is horizontal, so that by said movements the beam progressively occupies different locations within said coffer dam, the sonar data being obtained for each location and corresponding to the actual distance between the location and the actual position of the head, the coffer dam having pitch and roll transducer means for obtaining pitch and roll measurements, and a pressure monitor which enables a measurement of the height of one of the sonar heads to be obtained, a computer on the support vessel receiving the sonar data and the said measurements and correcting the sonar data using said measurements.

In a further arrangement the apparatus for use in performing the method is characterised in that the body comprises a buoy having two sonar heads mounted on a common mounting and capable of movement by rotation in steps about a vertical axis, each head emitting a narrow sonar beam onto the seabed, the angle of the beam at each step being capable of incrementation in steps so as to progressively occupy different locations within the area being scanned, the sonar data being obtained for each location and corresponding to the actual position of the head, the buoy being handled by a crane wire connected to a clump weight resting on the seabed and running from a crane on a support vessel, a wire passing from a winch on the buoy around pulley means on the clump weight to a lever connected to gimbals mechanism on the buoy, the gimbals mechanism driving two transducers to give said two measurements (X,Y) corresponding to sway position and surge position of the buoy, the crane wire passing in a loop to a float above the buoy which keeps the crane wire below it taut, the buoy also comprising pitch and roll transducer means to obtain pitch and roll measurements, compass means giving the measurement about a vertical axis, footage mechanism giving measurement relating to the height of the sonar heads above the seabed, a computer on the support vessel receiving the sonar data and the said measurements and correcting the sonar data using said measurements.

The crane wire may terminate at the buoy and a wire passing from a winch on the buoy around pulley means and a footage mechanism on the clump weight resting on the seabed to a lever is connected to the gimbals mechanism and only one sonar head is used in place of two.

In a further arrangement, apparatus for use in performing the method is characterised in that the body comprises a ROV having a sonar head capable of movement by rotation in steps about a vertical axis, the head emitting a narrow sonar beam onto the seabed, the position of the beam from the head being capable of being moved relatively to said ROV in steps about a second axis parallel to the plane of the common mounting so that by said movements different locations form the area being scanned, the sonar data being obtained for each location and corresponding to the actual distance between the location and the actual position of the head, the ROV being handled by a crane wire running from a crane on a support vessel, a wire passing from a winch on the ROV to a clump weight resting on the seabed, the wire passing through a lever connected to gimbals mechanism driving two transducers to give said measurements (X,Y) corresponding to the sway position and surge position of the ROV, the ROV also comprising pitch and roll transducer means to obtain pitch and roll measurements, compass means giving the measurement about a vertical axis, footage mechanism giving measurement relating to the height of the sonar head above the seabed, a computer on the support vessel receiving the sonar data and the said measurements and correcting the sonar data using said measurements.

Several embodiments of the invention will now be described by way of example with reference to the accompanying drawings in which:

Figure 1 is a schematic view of a coffer dam in position over a pipeline buried in the seabed, together with a support vessel;

Figure 2 is a detail of the coffer dam shown in Figure 1;

Figure 3 is a block schematic showing the system of Figure 1;

Figures 4, 5, and 6 correspond to Figures 1 to 3 but show a second embodiment;

Figures 7 and 8 correspond to Figures 1 and 2 but show a third embodiment;

Figures 9, 10 and 11 correspond to Figures 1 to 3 but show a fourth embodiment;

Figure 12 is a three dimensional view of the embodiment of Figures 4 to 6 in use; and

Figures 13 to 18 are mathematical figures used in a mathematical explanation of the operation of the embodiment shown in Figure 4 to 6 and 10.

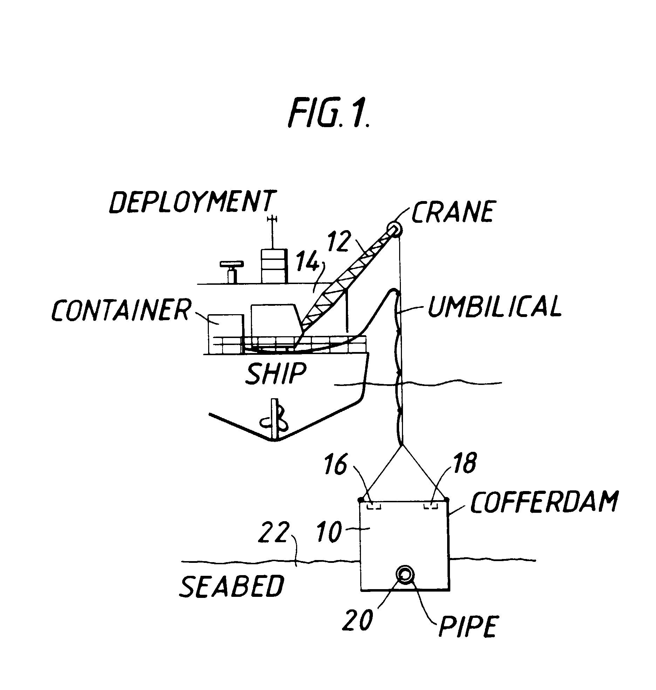

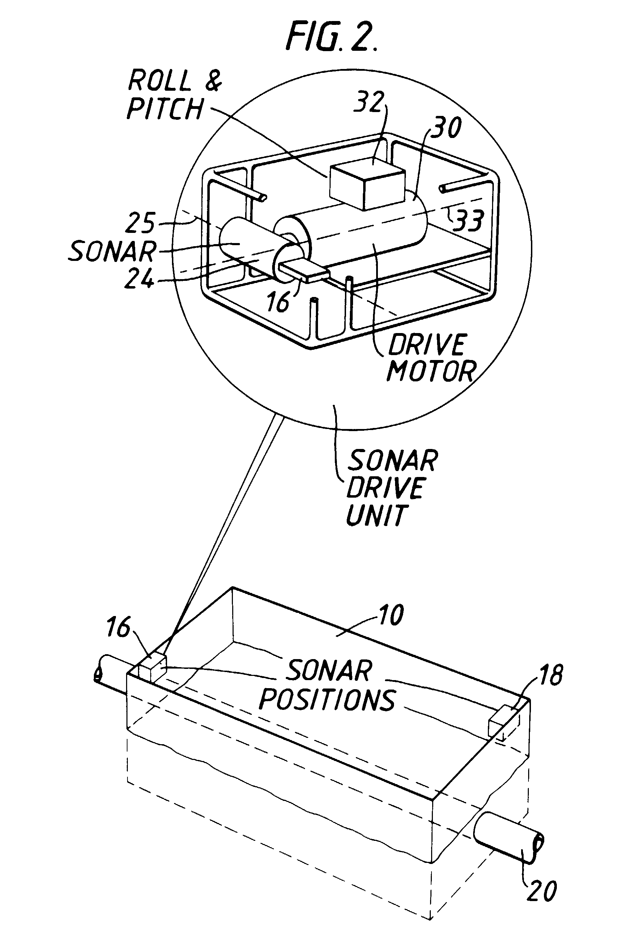

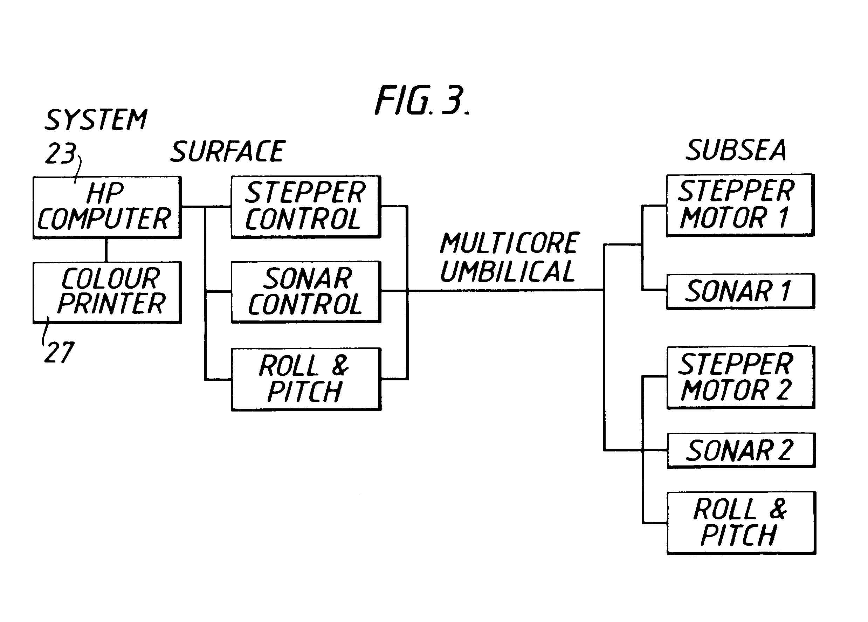

Figures 1 to 3 show a system in which a coffer dam 10 is lowered to the seabed by a crane 12 on a support vessel 14. The coffer dam 10 has two narrow-beam sonar heads 16, 18 placed on its end walls. The coffer dam 10 is placed in position over a pipeline 20 buried in the seabed 22. The dam is of the self-excavating type and the ends of the dam ultimately engage the pipeline 20. The pipeline 20 may not be horizontal and it is not possible in general to ensure that the dam excavates itself down to a perfectly horizontal position.

Once the coffer dam 10 has finished excavating to position itself, the sonar heads 16, 18 are operated to give a picture of the seabed within the coffer dam 10 and the inside walls of the coffer dam. It is necessary to correct the sonar data so that all measurements are eventually taken in relation to a mean horizontal plane and therefore the coffer dam position is compensated for by obtaining measurements from the pitch and roll transducers. These indicate the degree to which the coffer dam position differs from a true horizontal position in the longitudinal sense (pitch measurement) and a true horizontal position in the width sense (roll measurement). These measurements are used to correct the sonar data when the seabed within the dam is scanned by the sonar heads 16, 18. The correction is performed in a computer 23 and a corrected representation is produced by a printer 27.

The position of the real seabed some distance away from the coffer dam (the seabed near the coffer dam curves downwardly where excavation to accommodate the walls of the coffer dam has taken place) is sensed by a pressure monitor giving a pressure P1. The height of one sonar head is also sensed by another pressure monitor giving a pressure P2. The difference between P1 and P2 gives a measurement of the height of the sonar head in relation to the real seabed. This measurement can be used to compensate the sonar data using the computer. Alternatively, the difference in pressure measurement (P1 - P2) is used as an indicator on a visual representation of the sonar data to relate the representation to the real seabed.

The sonar head 16 has a stepper motor 24 driving the head 16 about an axis 25 and has a second stepper motor 30 driving the head 16 about an axis 33. The head 18 is similar to the head 16 and the two heads produce a 3-dimensional picture of the seabed within the coffer dam 10. The head 16 scans across the pipe 20, the head being incremented for successive sonar "shots" by the stepper motor 24. The head 16 also scans parallel to the pipe, the head being incremented by the stepper motor 30.

The head 16 has associated with it a transducer 32 from which two measurements, one of roll position and one of pitch position, are obtained. The transducer is preferably of the type available under the trade name TRIMCUBE from Measurement Devices Leasing Limited of Aberdeen, Scotland.

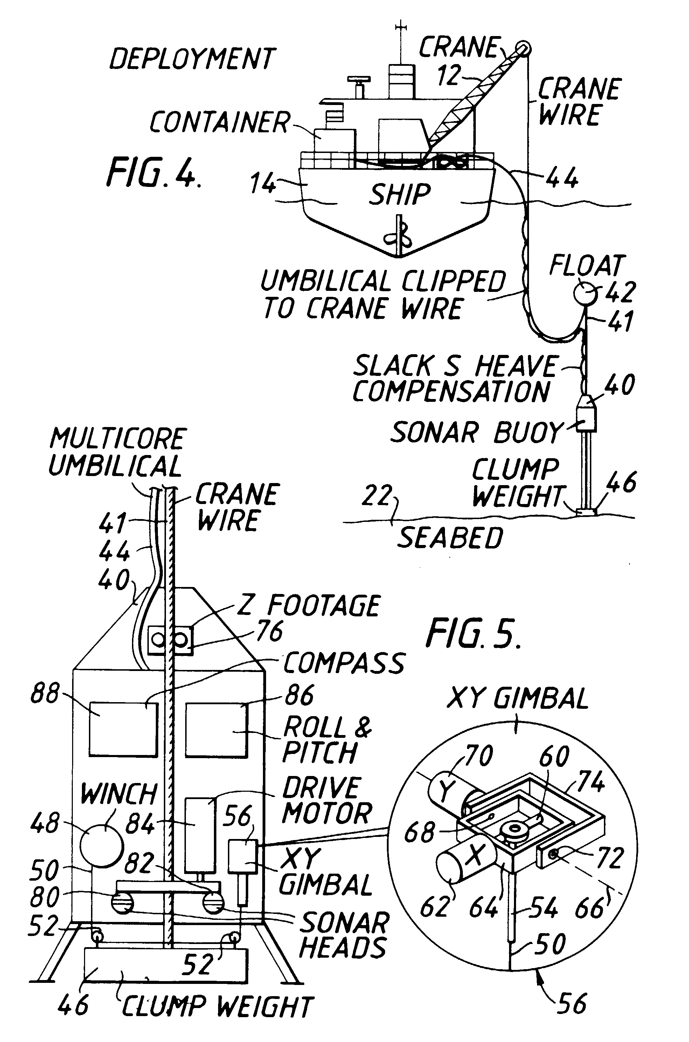

Figures 4,5 and 6 show a sonar buoy 40 which is suspended above the seabed 22 by a wire rope 41 attached to a float 42, together with an umbilical cable 44. The wire 41 is handled by a crane 12 on a support vessel 14. The wire 41 goes downwardly through the buoy 40 and is attached to a clump weight 46 resting on the seabed 22.

The buoy 40 carries a winch 48 from which a wire rope 50 extends around two pulleys 52 on the clump weight 46 and the rope 50 is attached to a lever 54 of a gimbal mechanism 56.

The lever 54 is fast with a shaft 60 of a first angular transducer 62. The transducer 62 is mounted on a frame 64, which is pivoted about an axis 66 at right angles to the shaft 60. The frame 64 is fast with a shaft at 68, concentric with the axis 66, and the shaft 68 is the shaft of a second angular transducer 70. The axis 66 is defined by the shaft 68 and another shaft 72 both of which are journalled in a frame 74 secured to the body of the buoy 40.

Motion of the buoy 40 relative to the clump weight 46 on the seabed 22 causes displacements of the transducers 62 and 70 giving measurements of the "X" and "Y" components of motion of the buoy 40. These measurements are used to compensate the sonar data for the sea motion.

The buoy 40 also has a footage mechanism 76 comprising two wheels which run on the wire rope 41 and which drive a transducer giving a measurement of the length of the wire rope 41 between the clump weight 46 and the horizontal level occupied by the two sonar heads (see below). Using that information in conjunction with the "X" and "Y" angular information from the transducers 62 and 70 and the roll and pitch angular information from the transducer 86, the lateral displacements (surge and sway) and the perpendicular movement (heave) are calculated. The buoy 40 also carries two sonar heads 80, 82 on a common mounting driven by a stepper motor 84. Finally the buoy 40 has a roll and a pitch transducer at 86, and a compass 88 giving a measurement of the heading of the buoy 40.

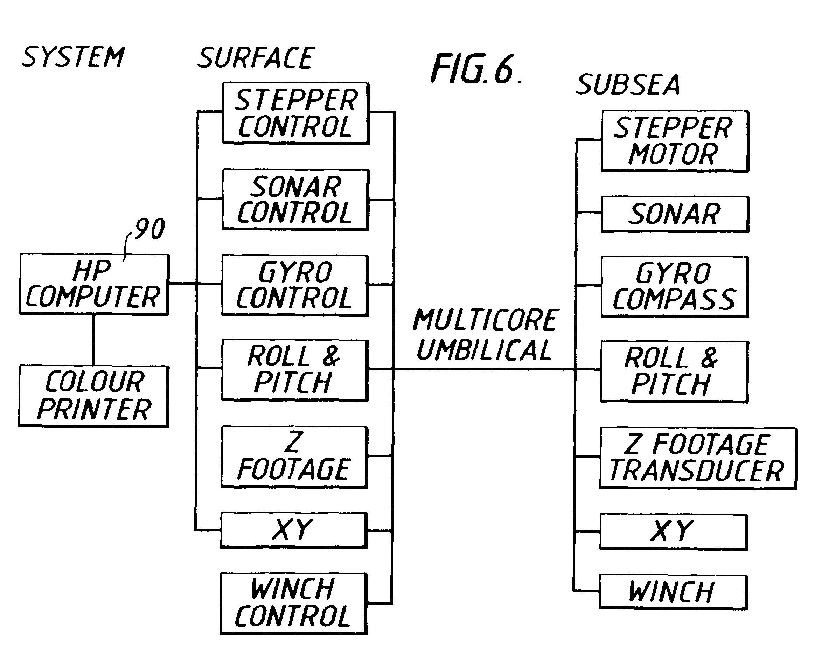

As shown in Figure 6, the measurements corresponding to heading (the compass 88) roll and pitch, the sway position "X" and the surge position "Y" are used in a computer 90 to compensate the sonar data for the sea motion of the buoy 40.

The sonar heads 80, 82 scan the seabed, for example to make an accurate picture of the area to be excavated. For each emitted sonar pulse, and its return pulse, there is a corresponding set of measurement values of heading, roll, pitch, "X" position and "Y" position which are used in the computer 90 to compensate for the motion of the buoy 40 due to sea motion.

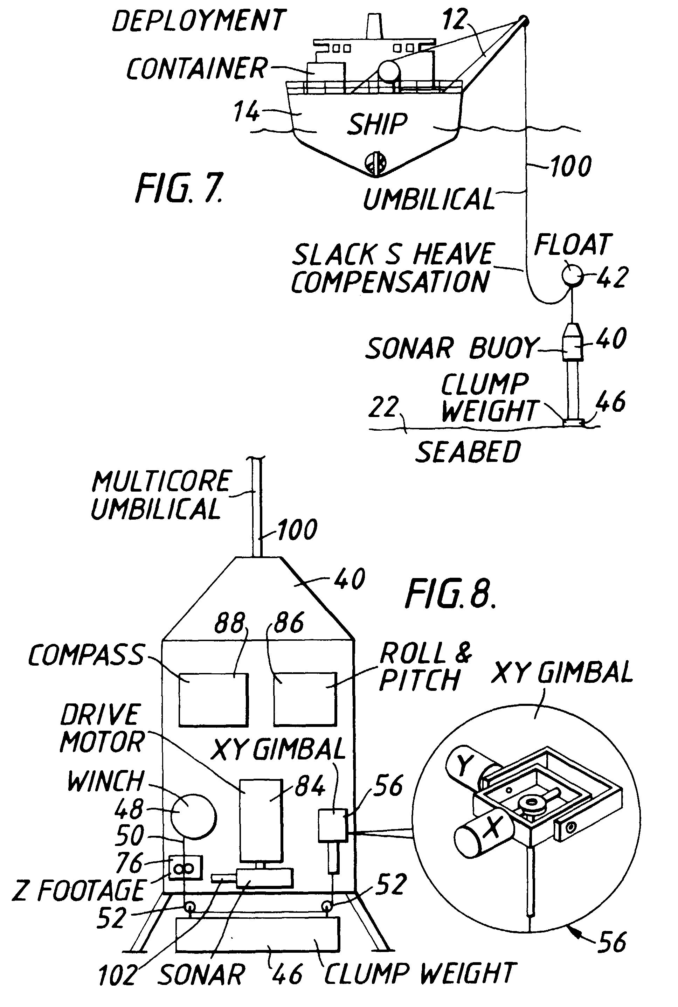

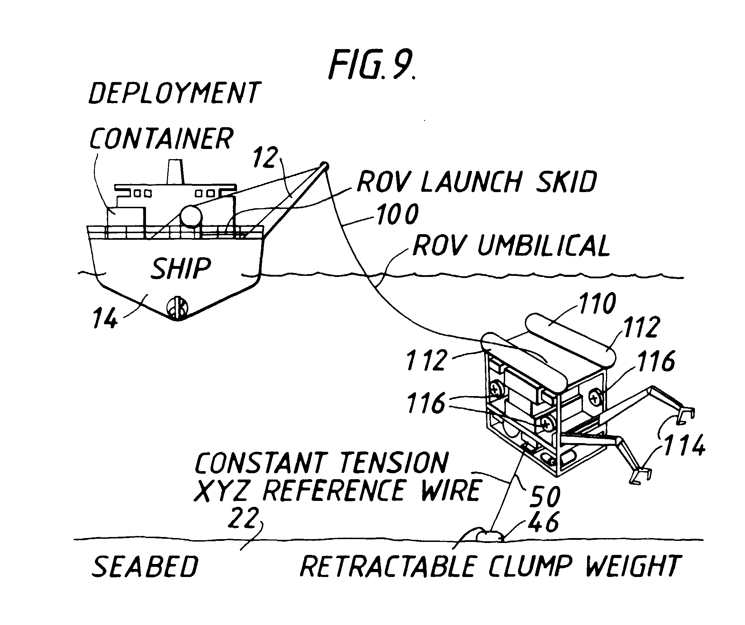

Figures 7 and 8 shown an embodiment similar to that shown in Figures 4 to 6 and reference numerals are used which are the same for the same components. However, the umbilical cable 100 is combined with a crane wire (not shown) and is used to lift the buoy 40 into and out of the water.

The wire rope 50 from the winch 48 passes drives the footage mechanism 76, instead of the crane wire 41 as in the previous embodiment. A single sonar head 102 is shown on the buoy 40 driven by a stepper motor 84.

The measurements from the transducers corresponding to heading, roll and pitch, the sway position "X" and the surge position "Y" are used in a computer to compensate the sonar data for the sea motion of the buoy 40 as before.

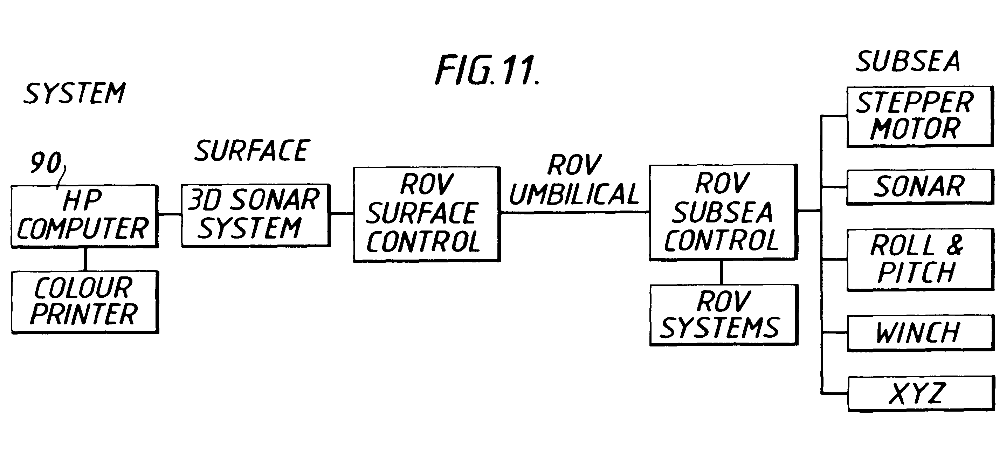

Figures 9 to 11 show yet another embodiment. This time the "body" is formed by a ROV 110 having buoyancy tanks 112 and connected to the crane 12 of the support vessel 14 by an umbilical 100 combining a lifting wire handled by the crane 12 as before.

The ROV 110 has manipulators 114 and four drive propellers 116 driven by electric motors. The ROV has a single sonar scanning head 102 driven by a stepper motor 84.

The wire rope 50 drives the footage mechanism 76 and passes downwardly from the mechanism 76 through the bore of the lever 54 which is hollow in this instance. The rope 50 is connected directly to the clump weight 46.

The winch 48 shown in Figures 5 and 8 is electrically or hydraulically driven and is non-rotatable unless electric or hydraulic power is applied to the winch.

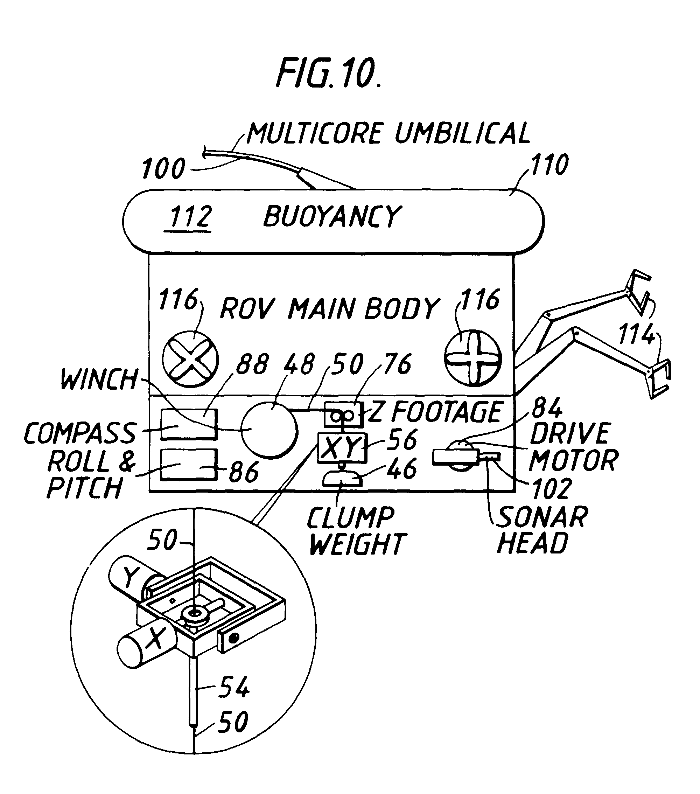

The winch shown in Figure 10 a constant force is applied to the clump weight 46 (a relatively light weight compared to the 1 ton weight for example used in Figures 5 and 8) to lift the weight while the ROV is launched or recovered from the sea or the ROV is travelling without scanning the seabed.

When scanning is to be carried out a constant force of lower value is applied to the weight (this value is less than the weight of the clump weight 46) so that the clump weight descends to the seabed. The constant force is maintained to keep the wire 50 tight while the winch 48 recovers the wire 50, or allows the wire 50 to be paid out as the ROV moves due to sea motion, even though the ROV propellers are endeavouring to keep the ROV at a constant position.

The sonar data is compensated for sea motion of the ROV using the measurements from the transducers in the computer 90 as before.

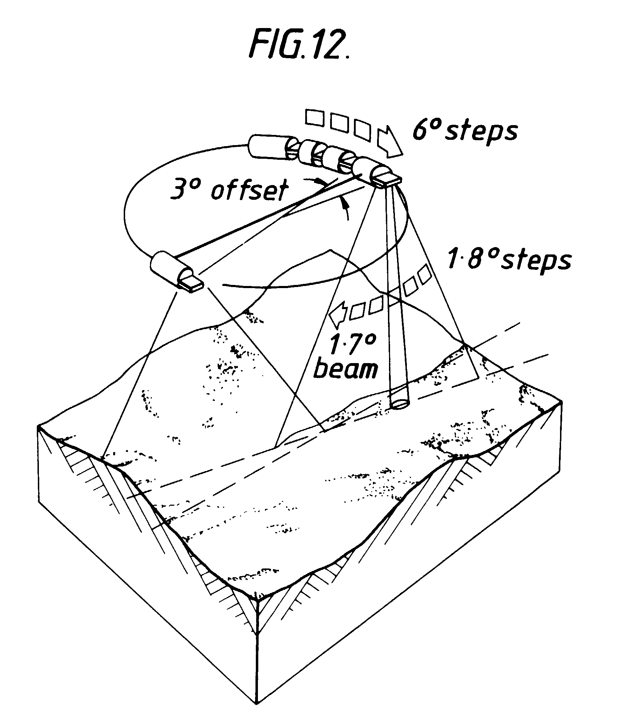

Figure 12 shows the embodiment of Figures 4 to 6 in use. The scanning heads are rotated through 180° in steps of 6°. At each step, each scanning head emits a sonar pulse in a beam having an included angle of 1.7°. Each head is incremented in steps of 1.8° through a fan-shaped arc, as shown, of 120°. The scanning heads are not parallel but are mutually offset by 3° (as shown). This gives better distribution of the non-overlapping scans. This mode of scanning is known as radial scanning. The scan angle can be varied from 90° to 180°. For the system shown in Figure 12, a total of 30 double scans are recorded over a total number of 60 radial scans. For head increments of 1.8° and scan angles of 180°, 60 scans will produce 6000 data points.

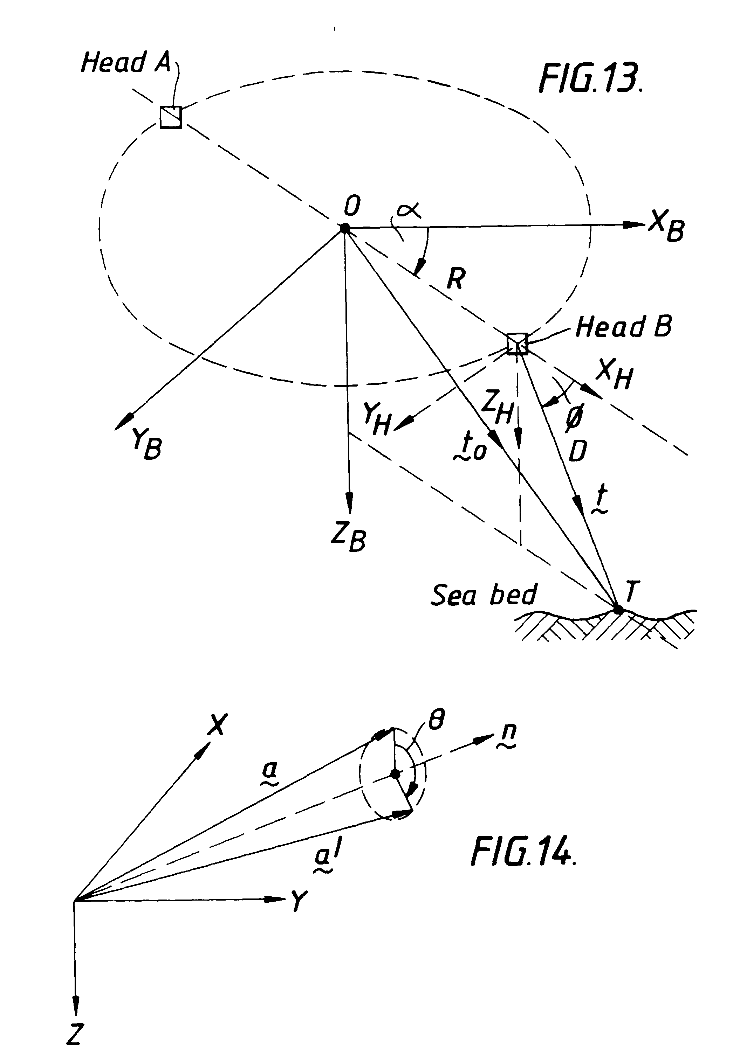

There follows next a mathematical description of the compensation of sonar data obtained from operation of the embodiment described with reference to Figures 4 to 6 and 10. The description is with reference to Figures 13 to 18.

The buoy carries two sonar heads on a common mounting driven by a stepper motor. Define a right-handed co-ordinate system fixed in the buoy with the X-axis aligned with the compass heading 0°N, then the heads A and B are stepped incrementally around the described circle in the XY plane.

Figure 13 shows a sonar return at head B during a scan of the sea-bed.

(Here refer to Figure 13 which has the heading and legend shown below:

Sonar Return at Head B During Scan of Seabed

Legend

$\underset{\sim}{t}$ is target vector relative to head B
$\underset{\sim}{t}_O$ is target vector relative to buoy origin O
$X_H Y_H Z_H$ is co-ordinate system fixed at head B
$X_B Y_B Z_B$ is co-ordinate system fixed in buoy
$\alpha$ is angle between head B and $X_B$ axis due to stepper motor
R is radius of described circle
D is distance of target T from head B
$\phi$ is angle of sonar pulse from $X_B Y_B$ plane)

The co-ordinates of the target relative to the origin O are then given by:

$$\underset{\sim}{t}_O = (D \cos \phi + R,\ O,\ D \sin \phi) \dots\dots\dots\dots\dots\dots\dots\dots\dots\dots\dots\ (1a)$$

A similar expression can be derived for head A during its scan, for distance D' and angle $\phi'$ this can be written:

$$\underset{\sim}{t}_o = (D'\cos \phi' - R, \ 0, \ D'\sin\phi') \ \ldots\ldots\ldots\ldots\ldots\ldots\ldots\ldots\ldots \quad (1b)$$

The following analysis will then apply equally to scans from head B and head A. The co-ordinates of the target relative to the axes of the buoy itself are then given by a rotation of the target vector $t_o$ through an angle $-\alpha$ about $Z_B$, the Z-axis of the buoy:

$$\underset{\sim}{t}_B = \underset{\sim}{T} \ (\underset{\sim}{t}_o, \ \underset{\sim}{k}, \ -\alpha) \ \ldots\ldots\ldots\ldots\ldots\ldots\ldots\ldots\ldots\ldots\ldots\ldots\ldots \quad (2)$$

where

$\underset{\sim}{k}$ = (0,0,1) a unit vector along Z-axis of buoy
$\underset{\sim}{T}$ is a vector function representing the rotation

The vector function $\underset{\sim}{T}$ ( $\underset{\sim}{a}, \underset{\sim}{\hat{n}}, \theta$) is a general rotation of $\underset{\sim}{a}$ vector through an angle $\theta$ about an axis defined by a unit vector $\underset{\sim}{\hat{n}}$.

(Here refer to Figure 14 which has the heading and legend shown below:

Rotation of a vector about general axis

Legend

XYZ are a right-handed co-ordinate system

$\underset{\sim}{n}$  is axis of rotation
$\theta$ is angle of rotation
$\underset{\sim}{a}$ is vector to be rotated
$\underset{\sim}{a'}$ is resultant vector).

The vector function is given by:

$$\underset{\sim}{T}(\underset{\sim}{a},\underset{\sim}{\hat{n}},\theta) = (\underset{\sim}{a}.\underset{\sim}{\hat{n}})\underset{\sim}{\hat{n}} + \cos\theta(\underset{\sim}{a}-(\underset{\sim}{a}.\underset{\sim}{\hat{n}})\underset{\sim}{\hat{n}})+\sin\theta(\underset{\sim}{n}\wedge(\underset{\sim}{a}-(\underset{\sim}{a}.\underset{\sim}{\hat{n}})\underset{\sim}{\hat{n}})) \ \ldots\ldots\ldots\ldots\ldots \quad (3)$$

In general the buoy will be in constant motion with both rotational movement and changing displacement from its anchoring clump weight.

A fixed origin and co-ordinate system are defined outside of the buoy to which all target data can be related.

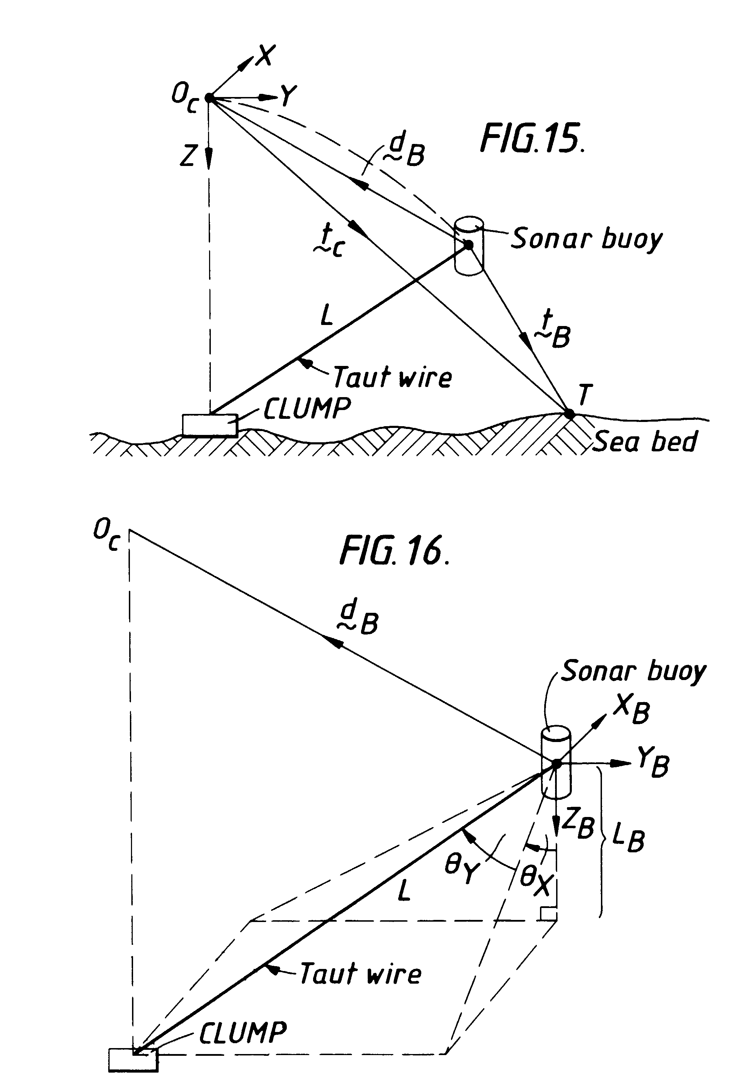

Consider first the case of no rotational movement but the buoy is displaced from its original position, the displacement in X,Y and Z, ie the surge, sway and heave components can be measured by the XY gimbal system on the buoy, see Figures 15 and 16.

The wire is kept taut and is of measured length L, calculated from the footage unit.

(Here refer to Figure 15 which has the heading and the legend shown below:

Sonar Buoy held by Taut Wire Displaced from Original Position at $0_c$

Legend

XYZ is co-ordinate system at fixed point $O_c$ above clump weight
L is length of taut wire
T is target

$\underset{\sim}{d}_B$ is displacement vector of $O_c$ relative to buoy

$\underset{\sim}{t}_B$ is target vector relative to buoy

$\underset{\sim}{t}_C$ is target vector relative to fixed origin $O_c$).

From Figure 15 we see that:

$$\underset{\sim}{t}_C = \underset{\sim}{t}_B - \underset{\sim}{d}_B \quad \dots\dots\dots\dots\dots\dots\dots\dots\dots\dots\dots\dots\dots (4)$$

(Here refer to Figure 16 which has the heading and the legend shown below:

Displacement of Sonar Buoy with no Rotational Movement

Legend

L is length of taut wire

$O_c$ is fixed origin outside of buoy

$\underset{\sim}{d}_B$ is displacement vector relative to the buoy

$X_B Y_B Z_B$ is co-ordinate system fixed in buoy

$\theta_X$ is angular displacement in $X_B Z_B$ plane

$\theta_Y$ is angular displacement in plane of taut wire and $Y_B$

$L_B$ is Z displacement relative to buoy)

Figure 16 shows the displacement of the buoy with no rotational movement. The gimbal mechanism reads two angular displacements $\theta_X$ and $\theta_Y$ between the buoy and the taut wire, as shown.

Then

$$\underset{\sim}{d}_B = (-L \sin\theta_X \cos\theta_Y, \ -L \sin\theta_Y, \ L-L_B) \quad \dots\dots\dots\dots\dots\dots\dots\dots\dots (5)$$

where

$$L_B = L \cos\theta_X \cos\theta_Y \qquad\qquad (6)$$

Now consider the full case where the buoy is also in rotational movement; define the three degrees of rotational freedom as:

Pitch      - clockwise rotation around Y-axis of buoy

Roll      - clockwise rotation around X-axis of buoy

Heading      - clockwise rotation around Z-axis of buoy

Then Equation (4) in the case of rotational movement would give an apparent position of the target:

$$\underset{\sim}{t}_C = \underset{\sim}{t}_B - \underset{\sim}{d}_B$$

and the true position of the target compensating for the rotational movement is

7

$$\underset{\sim}{t}_C = \underset{\sim}{C}(\underset{\sim}{t}_B) - \underset{\sim}{C}(\underset{\sim}{d}_B) \quad \dots\dots\dots\dots\dots\dots\dots\dots\dots\dots\dots\dots\dots\dots\dots\dots \quad (7)$$

where $\underset{\sim}{C}$ ( ) is a vector function representing a series of transformations to correct for roll, pitch and heading of the buoy.

Therefore, given the information to calculate the vectors $\underset{\sim}{d}_B$ and $\underset{\sim}{t}_B$ in equations (2) and (5) and by application of the compensation function, from equation (7) the true sonar target position can be calculated.

The compensation function is described in detail below:

The Compensation Function

The function is split into three stages:

i) Correct for roll and pitch

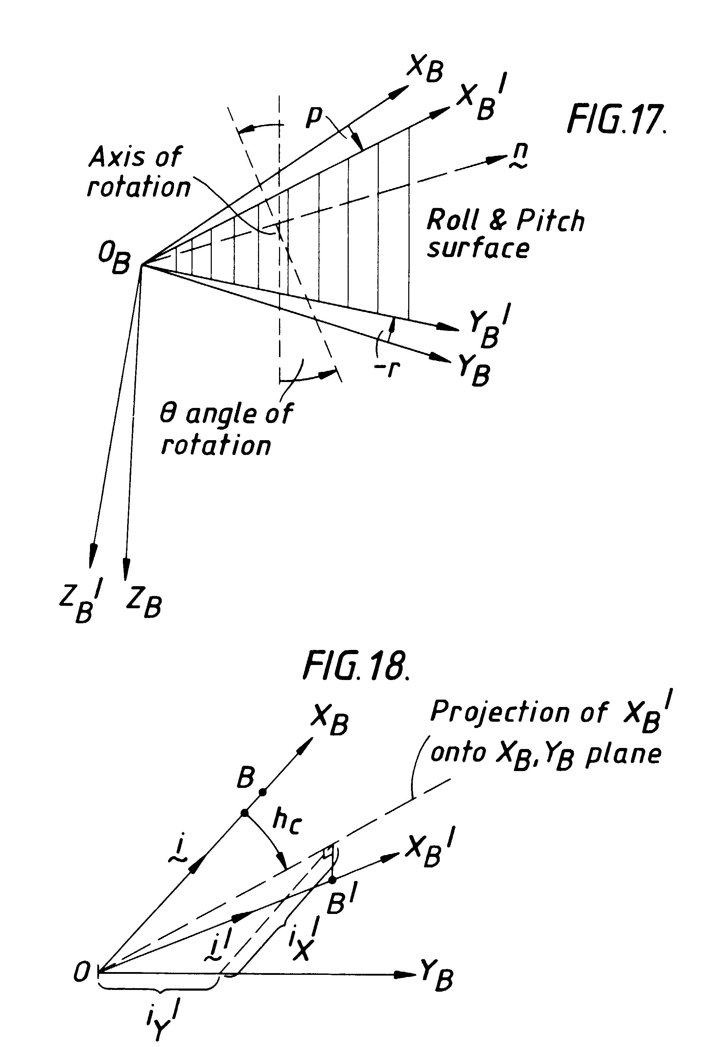

The roll and pitch of the sonar buoy are measured in terms of a surface, see Figure 17, which is at an angle to the fixed axes of the buoy.

(Here refer to Figure 17 which has the heading and legend shown below:

Compensation for Roll and Pitch of buoy

Legend

$X_B Y_B Z_B$ are axes of buoy without pitch and roll
$X_B' Y_B' Z_B'$ are axes of pitch and roll surface
p is pitch angle
r is roll angle
$\underset{\sim}{n}$ is axis of rotation for pitch and roll compensation
$\theta$ is angle of rotation about $\underset{\sim}{n}$ for pitch and roll compensation)

From Figure 17 we can calculate the angle of rotation $\theta$ and axis of rotation n of the surface relative to fixed axes:

$$\theta = \tan^{-1} (\surd \tan^2 p + \tan^2 r) \qquad (8)$$

$$\overset{\wedge}{\underset{\sim}{n}} = (-\tan\ r,\ \tan\ p,\ 0)\ \dots\dots\dots\dots\dots\dots\dots\dots\dots\dots\dots\dots\dots\dots \quad (9)$$

Then $\underset{\sim}{C}_{rp}$ ( ) the compensation function for roll and pitch of the buoy is:

$$\underset{\sim}{C}_{rp}\ (\underset{\sim}{a})\ =\ \underset{\sim}{T}\ (\underset{\sim}{a},\ \overset{\wedge}{\underset{\sim}{n}},\ -\theta)\ \dots\dots\dots\dots\dots\dots\dots\dots\dots\dots\dots\dots \quad (10)$$

where $\underset{\sim}{a}$ is a target or displacement vector
and $\underset{\sim}{T}$ ( ) is defined in equation (3)

This represents a rotation through a composite roll and pitch angle corresponding to levelling the roll and pitch surface.

## ii) Correct for heading change

The compensation for roll and pitch changes the heading of the buoy and a correction must be applied, see Figure 18.

(Here refer to Figure 18 which has the heading and legend shown below:

Heading Correction

Legend

$\underset{\sim}{i}$ is unit vector along $X_B$ axis represented by $\overrightarrow{OB}$

$\underset{\sim}{i}$' is resultant vector of pitch and roll of $\underset{\sim}{i}$, represented by $\overrightarrow{OB}$'

$X_B, Y_B$ are X,Y axes of buoy without pitch and roll

$X_B$' is X-axis of pitch and roll surface

$h_c$ is heading correction

To calculate heading change, take unit vector $\underset{\sim}{i}$ representing the corrected heading and take it through the roll and pitch of the buoy, giving a vector $\underset{\sim}{i}$' representing the actual measured heading. Then, if $\underset{\sim}{i}$ = (1,0,0), then from section (i) above,

$$\underset{\sim}{i}' = \underset{\sim}{T} (\underset{\sim}{i}, \underset{\sim}{\hat{n}}, \theta) \dots\dots\dots\dots\dots\dots\dots\dots\dots\dots\dots\dots\dots\dots\dots\dots\dots\dots\dots (11)$$

where $\underset{\sim}{T}( )$ is defined in equation (3)

$$\underset{\sim}{i}' = (i'_X, i'_Y, i'_Z) \dots\dots\dots\dots\dots\dots\dots\dots\dots\dots\dots\dots\dots\dots\dots\dots\dots\dots (12)$$

The corrected heading is then given by:

$$h = h' - \tan^{-1} \left(\frac{i'_Y}{i'_X}\right) \tag{13}$$

where

h = corrected heading

h' = measured heading

## iii) Correct for heading of sonar buoy

To correct for heading of the buoy rotate the roll and pitch compensated vector through the corrected heading -h about the Z axis of the buoy:

$$C\ (a) = T\ (a,\ k,\ -h)\ \dots\dots\dots\dots\dots\dots\dots\dots\dots\dots\dots\dots\ (14)$$

where:

$a$ is the target or displacement vector corrected for roll and pitch

$k$ is unit vector along Z axis

h is corrected heading

$T$ ( ) is defined in equation (3)

## Claims

1. A method of underwater sonar scanning comprising using a sonar head (16, 18; 80, 82; 102) to scan the seabed to produce sonar data, the head being mounted on a body (10; 40; 110) immersed in the water, obtaining measurements relating to the postion of the sonar head above the seabed and using the measurements in a computer (90) in relation to the sonar data, characterised in that the body (10) is resting on the sea bed (22), the actual position of the body being different from a mean horizontal position, the body having one or two heads (16, 18; 80, 82; 102) and the or each head emitting a narrow sonar beam on to the seabed, the or each head (16, 18; 80, 82; 102) being moved relative to said body (10; 40; 110) in steps whereby the beam from the head is moved relative to said body (10, 40, 110) in steps so as to progressively occupy different locations within the area being scanned, and for each of said locations sonar data is obtained corresponding to the actual distance between said location and the actual position of the head, and for each said location a set of measurements is obtained comprising a measurement of the position of the or each head above the seabed (22) using pressure transducer means (76) and pitch and roll measurements, said set of measurements being used to correct the sonar data so that they relate to a mean horizontal position of the body.

2. A method of underwater sonar scanning comprising using a sonar head (16, 18; 80, 82; 102) to scan the seabed to produce sonar data, the head being mounted on a body (10; 40; 110) immersed in the water, obtaining measurements relating to the position of the sonar head above the seabed and using the measurements in a computer (90) in relation to the sonar data, characterised in that the body is tethered to a clump weight (46) resting on the sea bed (22), the actual position of the body being different from a mean horizontal position, the body having one or two heads (16, 18; 80, 82; 102) and the or each head emitting a narrow sonar beam on to the seabed, the or each head (16, 18; 80, 82; 102) being moved relative to said body (10; 40; 110) in steps whereby the beam from the head is moved relative to said body (10, 40, 110) in steps so as to progressively occupy different locations within the area being scanned, and for each of said locations sonar data is obtained corresponding to the actual distance between said location and the actual position of the head, and for each said location a set of measurements is obtained comprising a measurement of the position of the or each head above the seabed (22) using footage mechanism, pitch and roll measurements, measuring the horizontal displacement (X,Y) using two transducers (62, 70) mounted respectively on two mutually orthogonal shafts (60, 68) in a gimbals mechanism (56), the shaft (60) at the intersection of the shafts being connected to a lever (54) the angle of which depends on the angle between the vertical and a wire (50) connecting the body (40; 110) and the clump weight (46) and an angular displacement about a vertical axis, and using said measurements for each of said locations to correct the sonar data so that they relate to a mean horizontal position of the body.

3. A method according to claim 1 in which a first horizontal axis (33) of one head (16) is spaced apart horizontally from a first horizontal axis (33) of the second head (18) and a second horizontal axis (25) of the first head (16) is spaced apart horizontally from a second horizontal axis (25) of the second head (18).

4. A method according to claim 1, 2 or 3 including utilising the corrected sonar information to produce a 3D image.

5. Apparatus for use in performing the method according to claim 1 characterised in that the body comprises a coffer dam (10) handled by a crane wire running from a crane (12) on a support vessel (14), the coffer dam (10) having two sonar heads (16, 18) mounted upon it, each head (16, 18) being capable of movement by rotation in steps about a first axis which is horizontal when the coffer dam is horizontal, each head (16, 18) emitting a narrow sonar beam onto the seabed within the coffer dam, the position of the beam from the head being capable of being moved relatively to said coffer dam (10) in steps about a second axis orthogonal to said first axis, said second axis being horizontal when said coffer dam is horizontal the two axes being spaced apart horizontally when the coffer dam is horizontal, so that by said movements the beam progressively occupies different locations within said coffer dam (10), the sonar data being obtained for each location and corresponding to the actual distance between the location and the actual position of the head, the coffer dam (10) having pitch and roll transducer means (32) for obtaining pitch and roll measurements, and a pressure monitor which enables a measurement of the height of one of the sonar heads to be obtained, a computer (230) on the support vessel (140) receiving the sonar data and the said measurements and correcting the sonar data using said measurements.

6. Apparatus for use in performing the method according to claim 2 characterised in that the body comprises a buoy (40) having two sonar heads (80, 82) mounted on a common mounting and capable of movement by rotation in steps about a vertical axis, each head emitting a narrow sonar beam onto the seabed, the angle of the beam at each step being capable of incrementation in steps so as to progressively occupy different locations within the area being scanned, the sonar data being obtained for each location and corresponding to the actual position of the head, the buoy (40) being handled by a crane wire connected to a clump weight (46) resting on the seabed (22) and running from a crane (12) on a support vessel (14), a wire (50) passing from a winch (48) on the buoy (40) around pulley means (52) on the clump weight (46) to a lever (54) connected to gimbals mechanism (56) on the buoy (40), the gimbals mechanism (56) driving two transducers (62, 70) to give said two measurements (X,Y) ccorresponding to sway position and surge position of the buoy (40), the crane wire (41) passing in a loop to a float (42) above the buoy (40) which keeps the crane wire (41) below it taut, the buoy (40) also comprising pitch and roll transducer means (86) to obtain pitcch and roll measurements, compass means (88) giving the measurement about a vertical axis, footage mechanism (76) giving measurement relating to the height of the sonar heads above the seabed, a computer (23) on the support vessel (140) receiving the sonar data and the said measurements and correcting the sonar data using said measurements.

7. Apparatus as claimed in claim 6 with the variation that the crane wire (100) terminates at the buoy (40), a wire (50) passing from a winch (48) on the buoy (40) around pulley means (52) and a footage mechanism on the clump weight (46) resting on the seabed to a lever connected to the gimbals mechanism (56) and only one sonar head (102) is used in place of two.

8. Apparatus for use in performing the method according to claim 2 characterised in that the body comprises a ROV (110) having a sonar head (102) capable of movement by rotation in steps about a vertical axis, the head emitting a narrow sonar beam onto the seabed, the position of the beam from the head being capable of being moved relatively to said ROV (110) in steps about a second axis parallel to the plane of the common mounting so that by said movements different locations form the area being scanned, the sonar data being obtained for each location and corresponding to the actual distance between the location and the actual position of the head, the ROV (110) being handled by a crane wire (100) running from a crane (912) on a support vessel (14), a wire (50) passing from a winch (48) on the ROV to a clump weight (46) resting on the seabed, the wire (50) passing through a lever (54) connected to gimbals mechanism (560) driving two transducers to give said measurements (X,Y) corresponding to the sway position and surge position of the ROV, the ROV also comprising pitch and roll transducer means (86) to obtain pitch and roll measurements, compass means (88) giving the measurement about a vertical axis, footage mechanism (76) giving measurement relating to the height of the sonar head (102) above the seabed, a computer (23) on the support vessel (14) receiving the sonar data and the said measurements and correcting the sonar data using said measurements.

**Patentansprüche**

1. Verfahren der Unterwasser-Sonarabtastung unter Verwendung eines Sonarkopfes (16,18;80,82;102), um den Meeresgrund abzutasten und Sonardaten zu erzeugen, wobei der Kopf an einem Körper (10;40;110) angebracht ist, der in das Wasser eingetaucht ist, wobei Messungen mit Bezug auf die Position des Sonarkopfes über dem Meeresgrund erhalten werden und diese Messungen in einem Computer (90) mit Bezug auf die Sonardaten verwendet werden, dadurch gekennzeichnet, daß der Körper (10) auf dem Meeresgrund (22) ruht, wobei die aktuelle Position des Körpers von einer mittleren horizontalen Position abweicht, wobei der Körper einen Kopf oder zwei Köpfe (16,18;80,82;102) aufweist und der oder jeder Kopf einen schmalen Sonarstrahl auf den Meeresgrund aussendet, wobei der oder jeder Kopf (16,18;80,82;102) relativ zum Körper (10;40;110) in Schritten bewegt wird, wodurch der Strahl vom Kopf aus relativ zum Körper (10;40;110) in Schritten so bewegt wird, daß er nacheinander verschiedene Stellen innerhalb des abgetasteten Bereiches belegt, und für jede dieser Stellen werden Sonardaten erhalten, die dem aktuellen Abstand zwischen dieser Stelle und der aktuellen Position des Kopfes entsprechen, und für jede Stelle wird ein Satz von Messungen erhalten, der eine Messung der Position des oder jedes Kopfes oberhalb des Meeresgrundes (22), und zwar unter Verwendung einer Druckübertragungseinrichtung (76), sowie Nick- und Rollbewegungsmessungen umfaßt, wobei der Satz von Messungen dazu verwendet wird, die Sonardaten zu korrigieren, so daß sie Bezug haben zu einer mittleren horizontalen Position des Körpers.

2. Verfahren der Unterwasser-Sonarabtastung unter Verwendung eines Sonarkopfes (16,18;80,82;102), um den Meeresgrund abzutasten und Sonardaten zu erzeugen, wobei der Kopf an einem in das Wasser eingetauchten Körper (10;40;110) angebracht ist, wobei Messungen mit Bezug auf die Position des Sonarkopfes über dem Meeresgrund erhalten werden und diese Messungen in einem Computer (90) mit Bezug auf die Sonardaten verwendet werden, dadurch gekennzeichnet, daß der Körper an ein auf dem Meeresgrund (22)ruhenden Klotzgewicht (46) gefesselt ist, wobei die aktuelle Position des Körpers von einer mittleren horizontalen Position abweicht, wobei der Körper einen Kopf oder zwei Köpfe (16,18;80,82;102) aufweist und der oder jeder Kopf einen schmalen Sonarstrahl auf den Meeresgrund sendet, wobei der oder jeder Kopf (16,18;80,82;102) relativ zum Körper (10;40;110) in Schritten bewegt wird, wodurch der Strahl vom Kopf relativ zum Körper (10,40,110) in Schritten bewegt wird, um so nacheinander verschiedene Stellen innerhalb des abgetasteten Bereiches zu belegen, und für jede dieser Stellen werden Sonardaten erhalten, die dem aktuellen Abstand zwischen der Stelle und der aktuellen Position des Kopfes entsprechen, und für jede dieser Stellen wird ein Satz von Messungen erhalten, der eine Messung der Position des oder jedes Kopfes oberhalb des Meeresgrundes (22) unter Verwendung eines Fußmechanismus (footage mechanism), ferner Nick- und Rollbewegungsmessungen und Messung der horizontalen Verlagerung (X, Y) unter Verwendung von zwei Wandlern (62,70) umfaßt, die jeweils an zwei zueinander rechtwinkligen Wellen (60,68) in einem kardanischen Mechanismus (56) angebracht sind, wobei die eine Welle (60) an der Kreuzungsstelle der Wellen mit einem Hebel (54) verbunden ist, dessen Winkel vom Winkel zwischen der Vertikalen und einem Draht (50), der den Körper (40;110) und das Klotzgewicht (46) verbindet, und von einer winkligen Verlagerung um eine Vertikalachse abhängig ist, und diese Messungen für jede dieser Stellen werden dazu verwendet, um die Sonardaten zu korrigieren, so daß sie sich auf eine mittlere horizontale Position des Körpers beziehen.

3. Verfahren nach Anspruch 1, bei dem eine erste horizontale Achse (33) des einen Kopfes (16) im horizontalen Abstand von einer ersten horizontalen Achse (33) des zweiten Kopfes (18) und eine zweite horizontale Achse (25) des ersten Kopfes (16) im horizontalen Abstand von einer zweiten horizontalen Achse (25) des zweiten Kopfes (18) angeordnet ist.

4. Verfahren nach Anspruch 1, 2 oder 3, bei dem die korrigierte Sonarinformation zur Erzeugung eines 3D-Bildes genutzt wird.

5. Gerät zur Ausübung des Verfahrens nach Anspruch 1, dadurch gekennzeichnet, daß der Körper einen Kastenoder Fangdamm (10) aufweist, der durch ein Kranseil gehandhabt wird, das von einem Kran (12) auf einem Tragbehälter (14) abläuft, wobei der Fangdamm (10) zwei Sonarköpfe (16,18) aufweist, von denen jeder Kopf (16,18) in der Lage ist, eine Drehbewegung in Schritten um eine erste Achse auszuführen, die horizontal verläuft, wenn der Fangdamm horizontal liegt, wobei jeder Kopf (16,18) einen schmalen Sonarstrahl auf den Meeresgrund innerhalb des Fangdammes aussendet, wobei die Position des Strahles vom Kopf her relativ zum Fangdamm (10) bewegt werden kann, und zwar in Schritten um eine zweite, rechtwinklig zur ersten Achse liegenden Achse, wobei die zweite Achse horizontal verläuft, wenn der Fangdamm horizontal liegt, so daß durch diese Bewegungen der Strahl nacheinander verschiedene Stellen innerhalb des Fangdammes (10) belegt, wobei die Sonardaten für jede Stelle erhalten werden und dem aktuellen Abstand zwischen der Stelle und der aktuellen Position des Kopfes entsprechen, wobei der Fangdamm (10) Nick- und Rollbewegungwandler (32) für den Erhalt von Nick- und Rollbewegungsmessungen sowie einen Druckmonitor aufweist, der eine Messung der Höhe des einen der Sonarköpfe ermöglicht, wobei ein Computer (23) auf dem Tragbehälter (14) die Sonardaten und die Messungen empfängt und die Sonardaten unter Verwendung der Messungen korrigiert.

6. Gerät zur Ausübung des Verfahrens nach Anspruch 2, dadurch gekennzeichnet, daß der Körper eine Boje (40) mit zwei Sonarköpfen (80,82) aufweist, die an einer gemeinsamen Befestigung angebracht sind und in der Lage sind, eine Drehbewegung in Schritten um eine vertikale Achse auszuführen, wobei jeder Kopf einen schmalen Sonarstrahl auf den Meeresgrund aussendet, wobei der Winkel des Strahles bei jedem Schritt eine Zunahme in Schritten erfährt, um nacheinander verschiedene Stellen innerhalb des abgetasteten Bereiches zu belegen, wobei die Sonardaten für jede Stelle erhalten werden und der aktuellen Position des Kopfes entsprechen, wobei die Boje (40) durch ein Kranseil gehandhabt wird, das mit einem auf dem Meeresgrund ruhenden Klotzgewicht (46) verbunden ist und von einem Kran (12) auf einem Tragbehälter (14) abläuft, wobei ein Draht (50) von einer Winde (48) an der Boje (40) um Umlenkrollen (52) am Klotzgewicht (46) zu einem Hebel (54) führt, der mit dem Kardanmechanismus (56) an der Boje (40) verbunden ist, wobei der Kardanmechanismus (56) zwei Wandler (62,70) antreibt, um die beiden Messungen (X,Y) abzugeben, die der Schwankungsposition und der Schwebeposition der Boje (40) entsprechen, wobei das Kranseil (41) in einer Schleife zu einem Schwimmkörper (42) oberhalb der Boje (40) führt, der das Kranseil (41) unter sich straff gespannt hält, wobei die Boje (40) außerdem Nick- und Rollbewegungswandler (86) aufweist, um Nick- und Rollbewegungsmessungen zu erhalten, wobei eine Kompaßeinrichtung (88) eine Messung um eine vertikale Achse abgibt, ein Fußmechanismus (76) eine Messung abgibt, die der Höhe der Sonarköpfe oberhalb des Meeresgrundes entspricht, und wobei ein Computer (23) auf dem Tragbehälter die Sonardaten und die Messungen empfängt und die Sonardaten unter Verwendung der Messungen korrigiert.

**7.** Gerät nach Anspruch 6 mit der Abänderung, daß das Kranseil (100) an der Boje (40) endet, wobei ein Seil (50) von einer Winde (48) an der Boje (40) um Umlenkrollen (52) und einen Fußmechanismus am Klotzgewicht (46), das auf dem Meeresgrund ruht, zu einem Hebel führt, der mit dem Kardanmechanismus (56) verbunden ist, und daß nur ein Sonarkopf (102) anstelle von zweien verwendet wird.

**8.** Gerät zur Ausübung des Verfahrens nach Anspruch 2, dadurch gekennzeichnet, daß der Körper ein ROV (remotely operated vehicle) (110) mit einem Sonarkopf (102) aufweist, der in der Lage ist, eine Drehbewegung in Schritten um eine vertikale Achse auszuführen, wobei der Kopf einen schmalen Sonarstrahl auf den Meeresgrund aussendet, wobei die Position des Strahles vom Kopf her relativ zum ROV (110) in Schritten um eine zweite Achse parallel zur Ebene der gemeinsamen Befestigung bewegbar ist, so daß durch diese Bewegungen verschiedene Stellen den abzutastenden Bereich bilden, wobei die Sonardaten für jede Stelle erhalten werden und dem aktuellen Abstand zwischen der Stelle und der aktuellen Position des Kopfes entsprechen, wobei das ROV (110) durch ein Kranseil (100) gehandhabt wird, das von einem Kran (912) auf einem Tragbehälter (14) abläuft, wobei ein Draht (50) von einer Winde (48) am ROV zu einem Klotzgewicht (46) auf dem Meeresgrund führt, wobei der Draht (50) über einen Hebel (54) verläuft, der mit einem Kardanmechanismus (56) verbunden ist, der zwei Wandler antreibt, um die Messungen (X,Y) abzugeben, die der Schwebeposition und der Schwankungsposition des ROV entsprechen, wobei das ROV außerdem Nick- und Rollbewegungswandler (86) aufweist, um Nick- und Rollbewegungsmessungen zu erhalten, wobei eine Kompaßeinrichtung (88) die Messung um eine vertikale Achse abgibt, ein Fußmechanismus (76) eine Messung mit Bezug auf die Höhe des Sonarkopfes (102) über dem Meeresgrund abgibt und ein Computer (23) auf dem Tragbehälter (14) die Sonardaten und die Messungen empfängt und die Sonardaten unter Verwendung der Messungen korrigiert.

## Revendications

**1.** Procédé de balayage sonar sous-marin comprenant l'utilisation d'une tête de sonar (16, 18; 80, 82; 102) pour balayer le fond marin de façon produire des données de sonar, la tête étant montée sur un corps (10; 40; 110) immergé dans l'eau, l'obtention de mesures concernant la position de la tête de sonar au-dessus du fond marin et l'utilisation des mesures dans un ordinateur (90) en relation avec les données de sonar, caractérisé en ce que le corps (10) repose sur le fond marin (22), la position réelle du corps étant différente d'une position horizontale moyenne, le corps ayant une ou deux têtes (16, 18; 80, 82; 102) et la tête ou chaque tête émettant un faisceau sonar étroit vers le fond marin, la tête ou chaque tête (16, 18; 80, 82; 102) étant déplacée pas à pas par rapport au corps (10; 40; 110), grâce à quoi le faisceau provenant de la tête est déplacé pas à pas par rapport au corps (10, 40, 110), de façon à occuper progressivement différents emplacements à l'intérieur de la zone qui est balayée, et pour chacun de ces emplacements sont obtenues des données de sonar correspondant à la distance réelle entre l'emplacement considéré et la position réelle de la tête, et pour chaque emplacement est obtenu un ensemble de mesures comprenant une mesure de la position de la tête ou de chaque tête au-dessus du fond marin (22), utilisant des moyens transducteurs de pression (76), et des mesures de tangage et de roulis, cet ensemble de mesures étant utilisé pour corriger les données de sonar de façon qu'elles concernent une position horizontale moyenne du corps.

**2.** Procédé de balayage sonar sous-marin comprenant l'utilisation d'une tête de sonar (16, 18; 80, 82; 102) pour balayer le fond marin de façon à produire des données de sonar, la tête étant montée sur un corps (10; 40; 110) immergé dans l'eau, l'obtention de mesures concernant la position de la tête de sonar au-dessus du fond marin et l'utilisation des mesures dans un ordinateur (90) en relation avec les données de sonar, caractérisé en ce que le corps est amarré à un bloc (46) reposant sur le fond marin (22), la position réelle du corps étant différente d'une position horizontale moyenne, le corps ayant une ou deux têtes (16, 18; 80, 82; 102) et la tête ou chacune d'elles émettant un faisceau sonar étroit vers le fond marin, la tête ou chaque tête (16, 18; 80, 82; 102) étant déplacée pas à pas par rapport au corps (10; 40; 110), grâce à quoi le faisceau provenant de la tête est déplacé pas à pas par rapport au corps (10, 40, 110), de façon à occuper progressivement différents emplacements à l'intérieur de la zone qui est balayée, et pour chacun de ces emplacements sont obtenues des données de sonar correspondant à la distance réelle entre l'emplacement considéré et la position réelle de la tête, et pour chaque emplacement est obtenu un ensemble de mesures comprenant une mesure de la position de la tête ou de chaque tête au-dessus du fond marin (22), utilisant un mécanisme de mesure de métrage de câble, des mesures de tangage et de roulis, mesurant le déplacement horizontal (X, Y) en utilisant deux transducteurs (62, 70) montés respectivement sur deux axes mutuellement orthogonaux (60, 68) dans un mécanisme de suspension à la Cardan (56), l'axe (60) à l'intersection des axes étant accouplé à un levier (54) dont l'angle dépend de l'angle entre la verticale et un câble (50) reliant le corps (40; 110) et le bloc (46), et un déplacement angulaire autour d'un axe vertical, et ces mesures étant utilisées pour chacun des emplacements pour corriger les données de sonar de façon qu'elles concernent une position horizontale moyenne du corps.

3. Procédé selon la revendication 1, dans lequel un premier axe horizontal (33) d'une tête (16) est espacé horizontalement d'un premier axe horizontal (33) de la seconde tête (18), et un second axe horizontal (25) de la première tête (16) est espacé horizontalement d'un second axe horizontal (25) de la seconde tête (18).

4. Procédé selon la revendication 1, 2 ou 3, comprenant l'utilisation de l'information de sonar corrigée pour produire une image tridimensionnelle.

5. Appareil prévu pour l'utilisation dans la mise en oeuvre du procédé selon la revendication 1, caractérisé en ce que le corps comprend un batardeau (10) manipulé par un câble de grue s'étendant à partir d'une grue (12) sur un navire d'assistance (14), le batardeau (10) ayant deux têtes de sonar (16, 18) montées sur lui, chaque tête (16, 18) étant capable d'effectuer un mouvement par rotation pas à pas autour d'un premier axe qui est horizontal lorsque le batardeau est horizontal, chaque tête (16, 18) émettant un faisceau sonar étroit vers le fond marin à l'intérieur du batardeau, la position du faisceau provenant de la tête pouvant être déplacée pas à pas par rapport au batardeau (10), autour d'un second axe orthogonal au premier axe, ce second axe étant horizontal lorsque le batardeau est horizontal, les deux axes étant mutuellement espacés en direction horizontale lorsque le batardeau est horizontal, de façon que par ces mouvements le faisceau occupe progressivement différents emplacements à l'intérieur du batardeau (10), les données de sonar étant obtenues pour chaque emplacement et correspondant à la distance réelle entre l'emplacement et la position réelle de la tête, le batardeau (10) ayant des moyens transducteurs de tangage et de roulis (32) pour obtenir des mesures de tangage et de roulis, et un contrôleur de pression qui permet d'obtenir une mesure de la hauteur de l'une des tête de sonar, un ordinateur (230) sur le navire d'assistance (140) recevant les données de sonar et les mesures précitées et corrigeant les données de sonar en utilisant ces mesures.

6. Appareil prévu pour l'utilisation dans la mise en oeuvre du procédé selon la revendication 2, caractérisé en ce que le corps comprend une bouée (40) ayant deux têtes de sonar (80, 82) montées sur une monture commune et capables d'effectuer un mouvement par rotation pas à pas autour d'un axe vertical, chaque tête émettant un faisceau sonar étroit vers le fond marin, l'angle du faisceau à chaque pas pouvant être incrémenté pas à pas de façon que le faisceau occupe progressivement différents emplacements à l'intérieur de la zone qui est balayée, les données de sonar étant obtenues pour chaque emplacement et correspondant à la position réelle de la tête, la bouée (40) étant manipulée par un câble de grue relié à un bloc (46) reposant sur le fond marin (22), et s'étendant à partir d'une grue (12) sur un navire d'assistance (14), un câble (50) partant d'un treuil (48) sur la bouée (40) et passant autour de moyens à poulies (52) sur le bloc (46), pour atteindre un levier (54) accouplé à un mécanisme de suspension à la Cardan (56) sur la bouée (40), le mécanisme de suspension à la Cardan (56) entraînant deux transducteurs (62, 70) pour fournir les deux mesures (X, Y) correspondant à la position de déplacement horizontale et à la position de déplacement verticale de la bouée (40), le câble de grue (41) passant en une boucle dans un flotteur (42) au-dessus de la bouée (40), qui maintient tendu le câble de grue (41) au-dessous de lui, la bouée (40) comprenant également des moyens transducteurs de tangage et de roulis (86), pour obtenir des mesures de tangage et de roulis, des moyens à compas (88) donnant la mesure autour d'un axe vertical, un mécanisme de mesure de métrage de câble (76), donnant une mesure concernant la hauteur des têtes de sonar au-dessus du fond marin, un ordinateur (23) sur le navire d'assistance (140) recevant les données de sonar et les mesures précitées, et corrigeant les données de sonar en utilisant ces mesures.

7. Appareil selon la revendication 6 avec la variante consistant en ce que le câble de grue (100) se termine à la bouée (40), un câble (50) partant d'un treuil (48) sur la bouée (40), et passant autour de moyens à poulies (52) et d'un mécanisme de mesure de métrage de câble sur le bloc (46) reposant sur le fond marin, pour atteindre un levier accouplé au mécanisme de suspension à la Cardan (56), et une seule tête de sonar (102) est utilisée à la place de deux.

8. Appareil prévu pour l'utilisation dans la mise en oeuvre du procédé selon la revendication 2, caractérisé en ce que le corps comprend un véhicule sous-marin télécommandé (ou ROV) (110) ayant une tête de sonar (102) capable d'effectuer un mouvement par rotation pas à pas autour d'un axe vertical, la tête émettant un faisceau sonar étroit vers le fond marin, la position du faisceau émis par la tête pouvant être déplacée pas à pas par rapport au ROV (110), autour d'un second axe parallèle au plan de la monture commune, de façon que par ces mouvements, différents emplacements forment la zone qui est balayée, les données de sonar étant obtenues pour chaque emplacement et correspondant à la distance réelle entre l'emplacement et la position réelle de la tête, le ROV (110) étant manipulé par un câble de grue (100) partant d'une grue (912) sur un navire d'assistance (14), un câble (50) partant d'un treuil (48) sur le ROV, pour aller jusqu'à un bloc (46), reposant sur le fond marin, le câble (50) traversant un levier (54) accouplé à un mécanisme de suspension à la Cardan (560) entraînant deux transducteurs, pour donner les mesures (X, Y) correspondant à la position de déplacement horizontale et à la position de déplacement verticale du ROV, le ROV comprenant également des moyens transducteurs de tangage et de roulis (86) pour obtenir des mesures de tangage et de roulis, des moyens à compas (88) donnant la mesure autour d'un axe vertical, un mécanisme de mesure de métrage de câble (76) donnant une mesure concernant la hauteur de la tête de sonar (102) au-dessus du fond marin, un ordinateur (23) sur le navire d'assistance (14) recevant les données de sonar et les mesures précitées, et corrigeant les données de sonar en utilisant ces mesures.

# FIG.1.

DEPLOYMENT

CRANE

12

14

CONTAINER

UMBILICAL

SHIP

16  18

COFFERDAM

22  10

SEABED

20  PIPE

# FIG. 2.

ROLL &
PITCH

32

30

25

SONAR

24

16

33

DRIVE
MOTOR

SONAR
DRIVE
UNIT

16

10

18

SONAR
POSITIONS

20

# FIG. 3.

SYSTEM

23

SURFACE

SUBSEA

HP COMPUTER

COLOUR PRINTER

27

STEPPER CONTROL

SONAR CONTROL

ROLL & PITCH

MULTICORE UMBILICAL

STEPPER MOTOR 1

SONAR 1

STEPPER MOTOR 2

SONAR 2

ROLL & PITCH

EP 0 483 996 B1

DEPLOYMENT

CONTAINER

FIG. 4.

CRANE
12

CRANE
WIRE

14

SHIP

44

UMBILICAL CLIPPED
TO CRANE WIRE

FLOAT
42
41

SLACK S HEAVE
COMPENSATION

40

SONAR BUOY

CLUMP
WEIGHT

22

46

SEABED

MULTICORE
UMBILICAL

41
44
40

CRANE
WIRE

Z FOOTAGE
76

COMPASS

86

ROLL &
PITCH

DRIVE
MOTOR

XY
GIMBAL

SONAR
HEADS

88

WINCH
84
56

48
50
80
52

82

52

46  CLUMP WEIGHT

FIG. 5.

XY GIMBAL

70    60
74

Y

68

X

72

62   64   54  66

50

56

FIG.6.

SYSTEM

SURFACE

SUBSEA

MULTICORE UMBILICAL

HP COMPUTER

COLOUR PRINTER

90

STEPPER CONTROL

SONAR CONTROL

GYRO CONTROL

ROLL & PITCH

Z FOOTAGE

XY

WINCH CONTROL

STEPPER MOTOR

SONAR

GYRO COMPASS

ROLL & PITCH

Z FOOTAGE TRANSDUCER

XY

WINCH

DEPLOYMENT

CONTAINER

*12*

*14*

SHIP

FIG. 7.

*100*

UMBILICAL

SLACK S HEAVE
COMPENSATION

FLOAT

*42*

SONAR BUOY *40*

CLUMP
*22* WEIGHT *46*

SEABED

MULTICORE
UMBILICAL

*100*

*40*

FIG.8.

*88* *86*

COMPASS

ROLL &
PITCH   XY GIMBAL

DRIVE
MOTOR        XY GIMBAL

WINCH

*48*        *84*   *56*

*50*

*76*

Z FOOTAGE

*52*

*102* SONAR *46* CLUMP WEIGHT

*52*

Y

X

*56*

# FIG.9.

DEPLOYMENT

CONTAINER

*12*

ROV LAUNCH SKID

*100*

ROV UMBILICAL

SHIP

*14*

*110*

*112*

*112*

*116*

*116*

*114*

CONSTANT TENSION
XYZ REFERENCE WIRE

*22*

*50*

*46*

SEABED

RETRACTABLE CLUMP WEIGHT

# FIG.10.

MULTICORE UMBILICAL

100 / 110

112  BUOYANCY

116  ROV MAIN BODY  116

WINCH
88  48  50  76

COMPASS
Z FOOTAGE
84
DRIVE
MOTOR

ROLL &
PITCH
86
XY  56
46
102
SONAR
HEAD

114

CLUMP
WEIGHT

50
Y
X
54
50

FIG.11.

SYSTEM

SUBSEA

90
HP COMPUTER — 3D SONAR SYSTEM — ROV SURFACE CONTROL — ROV UMBILICAL — ROV SUBSEA CONTROL

COLOUR PRINTER

ROV SYSTEMS

STEPPER MOTOR

SONAR

ROLL & PITCH

WINCH

XYZ

EP 0 483 996 B1

## FIG.12.

6° steps

3° offset

1·8° steps

1·7° beam

FIG.13.

FIG.14.

FIG.15.

FIG. 16.

## FIG.17.

Axis of rotation

$X_B$

$X_B{}^I$

$p$

$\underset{\sim}{n}$

Roll & Pitch surface

$0_B$

$-r$

$Y_B{}^I$

$Y_B$

$\theta$ angle of rotation

$Z_B{}^I$ $Z_B$

## FIG.18.

$X_B$

Projection of $X_B{}^I$ onto $X_B, Y_B$ plane

$B$

$h_C$

$\underset{\sim}{i}$

$X_B{}^I$

$B^I$

$\underset{\sim}{i^I}$

$i_X{}^I$

$0$

$\longrightarrow Y_B$

$i_Y{}^I$